# EUROPEAN PATENT SPECIFICATION

(11) **EP 3 154 108 B1**
(45) Date of publication and mention of the grant of the patent: **04.09.2019**
(21) Application number: 15806562.3
(22) Date of filing: 26.05.2015
(51) Int. Cl.: H01M 2/20, H01M 2/10, H01M 10/48

(54) **BATTERY MODULE AND BATTERY PACK INCLUDING SAME**
BATTERIEMODUL UND BATTERIEPACK DAMIT
SUPPORT DE PILES ET BLOC-BATTERIE LE COMPRENANT

(30) Priority: 09.06.2014 KR 20140069531
(43) Date of publication of application: 12.04.2017
(73) Proprietor: LG Chem, Ltd., Seoul 07336 (KR)
(72) Inventor: KIM, Ki-Youn, Daejeon 34122 (KR); SEONG, Jun-Yeob, Daejeon 34122 (KR); EOM, Young-Sop, Daejeon 34122 (KR); YU, Sung-Chun, Daejeon 34122 (KR); KANG, Dal-Mo, Daejeon 34122 (KR)
(74) Representative: Cabinet Plasseraud
(86) International application number: PCT/KR2015/005260
(87) International publication number: WO 2015/190721

(56) References cited:
- WO-A1-2013/191478
- JP-A- 2006 344 572
- JP-A- 2012 109 275
- JP-A- 2013 051 185
- KR-A- 20110 092 042
- KR-A- 20130 049 984
- KR-A- 20130 142 652
- KR-A- 20140 056 835

## Description

### TECHNICAL FIELD

The present disclosure relates to a battery module, and more particularly, to a battery module having an improved structure capable of ensuring better welding between an electrode lead and a bus bar of a secondary battery, and a battery pack including the battery module.

### BACKGROUND ART

Recently, the demand for portable electronic products such as notebooks, video cameras, cellular phones or the like has rapidly increased, and electric vehicles, energy storage batteries, robots, satellites have been actively developed. For this reason, high-performance secondary batteries allowing repeated charging and discharging are being actively studied.

Currently, nickel-cadmium batteries, nickel-metal hydride batteries, nickel-zinc batteries, lithium secondary batteries, and the like are used as commercial secondary batteries. Among them, lithium secondary batteries have little to no memory effect in comparison with nickel-based secondary batteries, and thus lithium secondary batteries are gaining a lot of attention for their advantages of free charging or discharging, low self-discharging, and high energy density.

A lithium secondary battery generally uses lithium oxide and carbonaceous material as a positive electrode active material and negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior, namely a battery case, which seals and accommodates the electrode assembly together with an electrolyte.

Generally, a lithium secondary battery may be classified into a can-type secondary battery where the electrode assembly is included in a metal can and a pouch-type battery where the electrode assembly is included in a pouch of an aluminum laminate sheet, depending on the shape of the exterior.

Recently, secondary batteries are widely used not only for small-sized devices such as cellular phones but also middle-sized or large-sized devices such as vehicles and power storages. In particular, along with the exhaustion of carbon energy and the increased interest on environments, hybrid electric vehicles and electric vehicles attract attention globally, for example in US, Europe, Japan and Korea. In such a hybrid electric vehicle or electric vehicle, a battery pack for giving a driving force to a vehicle motor is the most essential part. Since a hybrid electric vehicle or electric vehicle may obtain a driving force by means of charging and discharging of the battery pack, the hybrid electric vehicle or electric vehicle ensures excellent fuel efficiency and exhausts no or reduced pollutants, and for this reason, hybrid electric vehicles and electric vehicles are used more and more. In addition, the battery pack of the hybrid electric vehicle or electric vehicle includes a plurality of secondary batteries, and the plurality of secondary batteries are connected to each other in series or in parallel to improve capacity and output. In this case, electrode leads provided at two or more secondary batteries may be connected to each other by means of welding or the like.

Meanwhile, the battery pack may include various battery pack protection devices such as a battery management system (BMS), in addition to the secondary batteries. These protection devices may play various roles, for example managing charge/discharge of the battery pack, ensuring safety or the like. These protection devices may function in consideration of various factors, among which a voltage of each secondary battery is representative. For example, a specific protection device may prevent overcharging or overdischarging of each secondary battery by using voltages at both ends of the corresponding secondary battery and may also have a balancing function for reducing the deviation of state of charges (SOCs) of secondary batteries.

In order to sense an electric characteristic such as voltages at both ends of each secondary battery included inn a battery pack as described above, a bus bar may be coupled in contact with an electrode lead of the secondary battery in order to sense a voltage of the electrode lead.

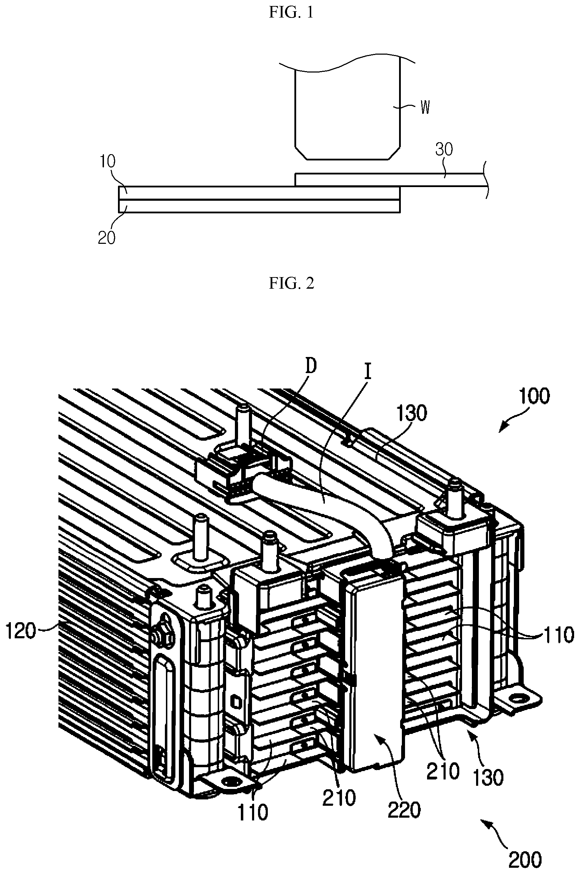

FIG. 1 is a front view schematically showing that two electrode leads 10, 20 and a bus bar 30 are welded in an existing technique.

Referring to FIG. 1, the bus bar 30 may be coupled to the electrode leads 10, 20 by means of welding using a welding unit W. In particular, in order to couple a bus bar and an electrode lead, ultrasonic welding may be used. However, as shown in FIG. 1, when the bus bar is welded to the electrode lead, another electrode lead may be coupled to the above electrode lead in order to connect another secondary battery thereto. In other words, in order to connect secondary batteries to each other, two electrode leads, namely a first electrode lead 10 and a second electrode lead 20, respectively provided at the secondary batteries may be coupled to each other, and the bus bar 30 may be welded to a portion where two electrode leads are coupled to each other.

However, if a bus bar is welded to two or more electrode leads, the bus bar may not be agreeably welded to the electrode leads. In particular, the electrode leads of a secondary battery may include a positive electrode lead and a negative electrode lead, where the positive electrode lead is generally made of aluminum (Al) and the negative electrode lead is generally made of copper (Cu). Therefore, in order to connect secondary batteries in series, a positive electrode lead of one secondary battery should be connected to a negative electrode lead of the other secondary battery. Here, since the positive electrode lead and the negative electrode lead are made of different materials, the bus bar is inevitably welded to electrode leads of different materials.

For example, in the configuration of FIG. 1, the first electrode lead 10 may be made of copper, and the second electrode lead 20 may be made of aluminum. At this time, the bus bar 30 may be made of copper and welded in contact with an upper surface of the first electrode lead by means of ultrasonic welding. In this case, since the second electrode lead is made of different material from the bus bar, the bus bar may not be easily welded to the second electrode lead. In addition, this may result in complicated welding conditions and weakened welding force.

Therefore, in the existing technique, a process of welding a bus bar to electrode leads may take a lot of time with deteriorated process capability. In addition, the bus bar may be separated from the electrode leads, and thus a voltage of a secondary battery may not be properly sensed using the bus bar. WO2013/191478 and JP2012 109275 are illustration of such prior art.

### DISCLOSURE

### Technical Problem

The present disclosure is designed to solve the problems of the related art, and therefore the present disclosure is directed to providing a battery module which may ensure improved welding and fixation power when welding a bus bar to a coupled portion of two or more electrode leads by means of ultrasonic welding, and a battery pack or a vehicle including the battery module.

### Technical Solution

According to the invention, as defined in the set of claims, there is provided a battery module, comprising: a first electrode lead provided at one secondary battery among a plurality of secondary batteries vertically stacked, the first electrode lead being made of a metal material with a plate shape; a second electrode lead provided at a secondary battery other than the secondary battery having the first electrode lead, the second electrode lead having a plate shape and being made of a metal material different from the first electrode lead, the second electrode lead having an upper surface coming into contact with a lower surface of the first electrode lead to be electrically connected to the first electrode lead, the second electrode lead having a recess region where the second electrode lead is partially absent below the first electrode lead; and a bus bar made of a metal material with a plate shape, the bus bar coming into contact with the first electrode lead in an area above the recess region of the second electrode lead.

According to the invention, the bus bar and the first electrode lead are welded by means of ultrasonic welding.

According to the invention, the recess region of the second electrode lead is located below the first electrode lead to encompass an entire area in which the bus bar is in contact with an upper surface of the first electrode lead.

Preferably, the recess region may be formed below the first electrode lead at one end portion of the first electrode lead.

According to the invention, the bus bar is made of the same metal material as the first electrode lead.

Also preferably, the bus bar and the first electrode lead may be made of copper, and the second electrode lead may be made of aluminum.

Also preferably, the bus bar may sense a voltage at a connection point of the first electrode lead and the second electrode lead.

Also preferably, the battery module may include two or more bus bars.

Also preferably, the battery module may further comprises a support member having a plate shape standing vertically, the support member having a through hole through which the electrode lead is provided and supported.

Also preferably, the bus bar may have a bent portion formed by bending a part thereof in a vertical direction, the bent portion being coupled and fixed to the support member.

In another aspect of the present disclosure, there is also provided a battery pack, which comprises the battery module according to the present disclosure.

In another aspect of the present disclosure, there is also provided a vehicle, which comprises the battery module according to the present disclosure.

In addition, not according to the present invention, there is also provided a method for manufacturing a battery module, comprising: preparing a secondary battery having a first electrode lead made of a metal material with a plate shape, another secondary battery having a second electrode lead made of a metal material different from the first electrode lead with a plate shape to be electrically connected the first electrode lead, and a bus bar made of a metal material with a plate shape; stacking the first electrode lead and the second electrode lead so that the second electrode lead is located below the first electrode lead and a recess region where the second electrode lead is partially absent is formed below the first electrode lead; positioning the bus bar on the first electrode lead in an area above the recess region of the second electrode lead, which is formed below the first electrode lead; and welding the first electrode lead and the bus bar.

Preferably, before positioning the bus bar, the method may further comprise: welding the second electrode lead and the first electrode lead.

Also preferably, before stacking the first electrode lead and the second electrode lead, the method may further comprise: cutting a part of the second electrode lead to form the recess region of the second electrode lead.

Also preferably, the first electrode lead and the bus bar may be welded by means of ultrasonic welding.

Also preferably, when welding the first electrode lead and the bus bar, the bus bar may be welded to the first electrode lead only in an area where the recess region of the second electrode lead is located below the first electrode lead.

### Advantageous Effects

According to the present disclosure, a bus bar may be welded to two or more electrode leads very agreeably.

In particular, according to the invention, a bus bar is ultrasonic-welded to a portion where two electrode leads are stacked and coupled, the bus bar is welded just to an electrode lead made of the same material as the bus bar, and thus it is possible to ensure improved welding capability and stable fixation by welding.

Therefore, the bus bar may be easily welded to the electrode leads, and thus it is possible to reduce time and costs required for manufacturing a battery module and a battery pack. In addition, inferior welding is reduced, and thus the bus bar may be stably fixed to the electrode leads without being separated therefrom. By doing so, a voltage of a secondary battery may be stably sensed through the bus bar.

### DESCRIPTION OF DRAWINGS

The accompanying drawings illustrate a preferred embodiment of the present disclosure and together with the foregoing disclosure, serve to provide further technical understanding.
FIG. 1 is a front view schematically showing that two electrode leads and a bus bar are welded in an existing technique.
FIG. 2 is a perspective view schematically showing a partial configuration of a battery module according to an embodiment of the present disclosure in an assembled state.
FIG. 3 is an exploded perspective view showing a partial configuration of FIG. 2.
FIG. 4 is an enlarged view showing a portion A of FIG. 2.
FIG. 5 is a schematic view showing the configuration of FIG. 4, observed from the below.
FIG. 6 is a front view schematically showing that a single bus bar and two electrode leads are coupled according to an embodiment of the present disclosure.
FIG. 7 is a front view schematically showing a partial configuration of the battery module according to an embodiment of the present disclosure, in which the bus bar and the electrode leads are connected.
FIG. 8 is a schematic view showing a sensing assembly including the bus bar according to an embodiment of the present disclosure.
FIG. 9 is an enlarged cross-sectional view schematically showing a partial configuration of FIG. 8.
FIG. 10 is a schematic flowchart for illustrating a manufacturing method of the battery module.

### BEST MODE

Hereinafter, preferred embodiments of the present disclosure will be described in detail with reference to the accompanying drawings. Prior to the description, it should be understood that the terms used in the specification should not be construed as limited to general and dictionary meanings, but interpreted based on the meanings and concepts corresponding to technical aspects of the present disclosure on the basis of the principle that the inventor is allowed to define terms appropriately for the best explanation.

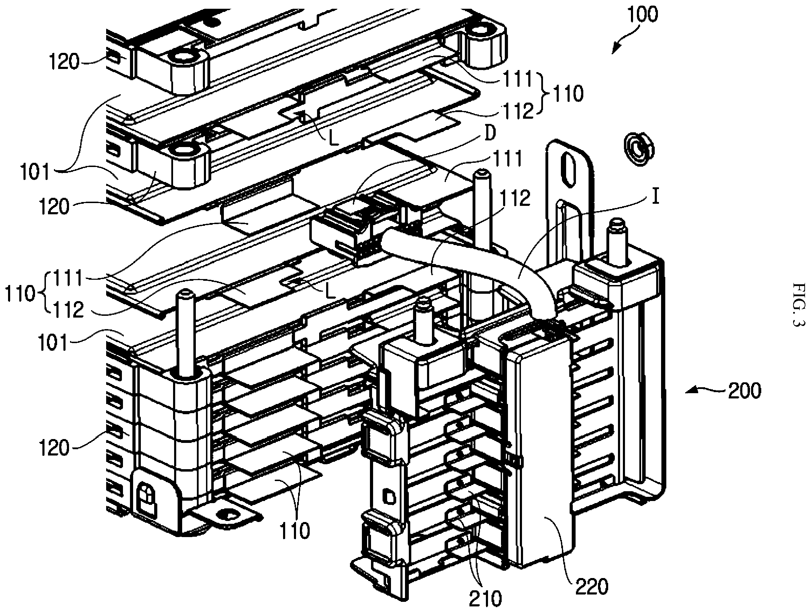

FIG. 2 is a perspective view schematically showing a partial configuration of a battery module according to an embodiment of the present disclosure in an assembled state, and FIG. 3 is an exploded perspective view showing a partial configuration of FIG. 2. However, in FIGS. 2 and 3, a front portion of the battery module at which an electrode lead 110 and a bus bar 210 are provided are well depicted, for convenience.

Referring to FIGS. 2 and 3, a battery module according to the present disclosure includes a first electrode lead 111, a second electrode lead 112 and a bus bar 210.

The battery module according to the present disclosure includes a plurality of secondary batteries 101, and the plurality of secondary batteries 101 may be stacked in one direction, for example in a vertical direction as shown in the figures. In particular, the secondary battery 101 may be a pouch-type secondary battery in which an electrode assembly is accommodated in a pouch exterior composed of an outer insulation layer, a metal layer and an inner adhesion layer.

Here, for easier stacking and assembling of the plurality of secondary batteries 101, a stacking frame 120 may be provided to the battery module. The stacking frame 120 is a component used for stacking the secondary batteries 101, and the stacking frame 120 holds a secondary battery 101 not to move. In addition, many stacking frames 120 may be stacked with each other to guide assembling of the secondary batteries 101. The stacking frame 120 may also be called with various names such as cartridge and may have a rectangular shape with a hollow center. In this case, four edges of the stacking frame 120 may be located at an outer circumference of the secondary battery 101. In addition, when the stacking frames 120 are stacked, the secondary battery 101 may be accommodated in a space formed by stacking the stacking frames 120.

The plurality of secondary batteries 101, also the stacking frames 120 for stacking the secondary batteries 101, may be called a cell assembly 100. In addition, one or more cell assemblies 100 may be included in the battery module.

As shown in FIG. 2, the cell assembly 100 may have an end plate 130, respectively at upper and lower portions thereof. The end plate has a plate shape with a great area and may cover upper and lower portions of the cell assembly 100, respectively. The end plate may give mechanical rigidity to the cell assembly 100 and play a role of protecting the cell assembly 100 against an external impact or the like. For this, the end plate may be made of a metal material such as steel.

Each secondary battery 101 included in the cell assembly 100 of the battery module may have an electrode lead. The electrode lead 110 may be connected to an electrode plate located in the secondary battery 101 to serve as a terminal for charging or discharging the secondary battery 101. In addition, the electrode lead 110 may include a positive electrode lead and a negative electrode lead. In other words, each secondary battery 101 may include a positive electrode lead connected to a positive electrode plate among electrode plates and a negative electrode lead connected to a negative electrode plate. In particular, in a pouch-type secondary battery, as shown in the figures, each electrode lead may have a plate shape made of a metal material with electric conductivity and may protrude out of a pouch exterior in a horizontally laid state.

The secondary batteries 101 included in the cell assembly 100 of the battery module may be electrically connected to each other to enhance capacity or output. At this time, the secondary batteries may be electrically connected to each other by coupling electrode leads.

As described above, in the battery module according to the present invention, in order to electrically connect two or more secondary batteries, electrode leads provided at different secondary batteries are coupled in contact vertically. Hereinafter, for convenience, in a structure according to the invention, where two electrode leads are coupled vertically, an electrode lead located at an upper portion is called a first electrode lead 111, and an electrode lead located at a lower portion is called a second electrode lead 112.

In the structure according to the invention, where two secondary batteries are stacked vertically, the first electrode lead 111 is regarded as an electrode lead provided at a secondary battery stacked at an upper portion, and the second electrode lead 112 is regarded as an electrode lead provided at a secondary battery stacked at a lower portion. In addition, the first electrode lead 111 and the second electrode lead 112 come into face contact with each other vertically and are coupled to each other. In other words, an upper surface of the second electrode lead 112 comes into contact with a lower surface of the first electrode lead 111 so that the second electrode lead 112 and the first electrode lead 111 are electrically connected to each other.

The first electrode lead 111 and the second electrode lead 112 may have a plate shape made of a metal material. However, in the present disclosure, the first electrode lead 111 and the second electrode lead 112 may be made of different metal materials. Further, the secondary batteries may be connected in series, and in this case, a positive electrode lead and a negative electrode lead made of different materials may come into contact with each other. In particular, the positive electrode lead may be made of aluminum, and the negative electrode lead may be made of copper. Therefore, when the secondary batteries are connected in series, the positive electrode lead and the negative electrode lead made of different kinds of metal materials may be coupled to each other. At this time, the positive electrode lead and the negative electrode lead may be coupled by means of ultrasonic welding or the like.

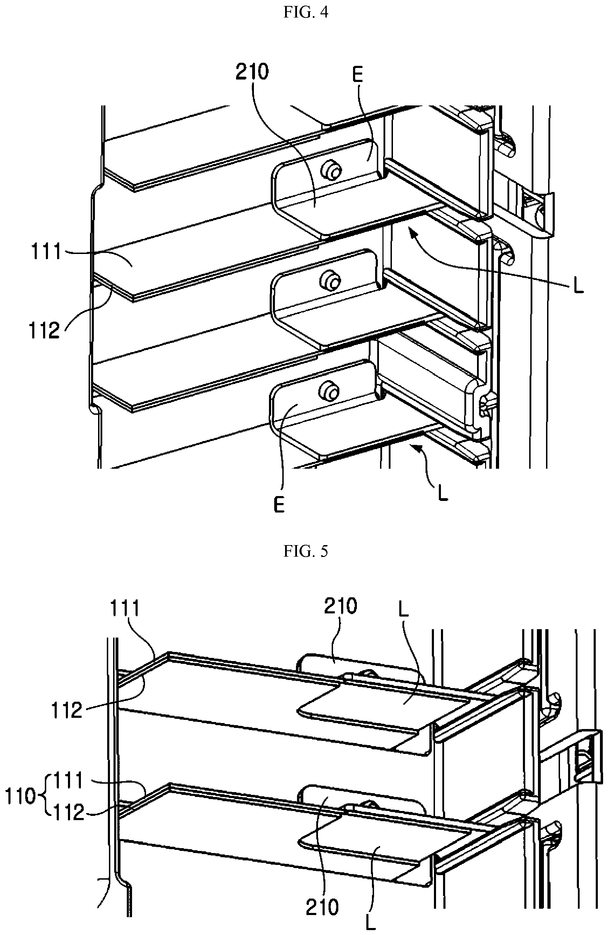

In particular, in the present disclosure, when electrode leads made of different metal materials come into contact and are coupled, a recess region may be formed in any one electrode lead. The recess region will be described in more detail with reference to FIGS. 4 and 5.

FIG. 4 is an enlarged view showing a portion A of FIG. 2, and FIG. 5 is a schematic view showing the configuration of FIG. 4, observed from the below.

Referring to FIGS. 4 and 5, the first electrode lead 111 and the second electrode lead 112 are stacked vertically, so that the upper surface of the second electrode lead 112 substantially come into contact with the lower surface of the first electrode lead 111, but a recess region L where the second electrode lead 112 is partially absent is formed below the first electrode lead 111. In other words, the recess region L may be regarded as a region where the second electrode lead 112 is not provided below the first electrode lead 111. The recess region L may be formed by preparing the second electrode lead 112 with the same shape and size as the first electrode lead 111 and then cutting out a predetermined region of the second electrode lead 112. In other case, the recess region may also be formed by making the second electrode lead 112 with a smaller size than the first electrode lead 111 from the beginning. The present disclosure is not limited to any detailed process for forming the recess region at the second electrode lead 112.

The bus bar 210 may have a plate shape made of a metal material with electric conductivity. In particular, the bus bar 210 may be laid horizontally, namely with a horizontally flat plate shape, to come into surface contact with the electrode lead and be coupled to the electrode lead.

Further, when two or more secondary batteries are connected to each other by means of their electrode leads, the bus bar 210 may come into contact with a contact portion of two electrode leads, namely a contact portion of the first electrode lead 111 and the second electrode lead 112, and be coupled thereto. At this time, the bus bar 210 may come into contact with the upper surface of the first electrode lead 111 and be coupled to the first electrode lead 111, as shown in FIGS. 2 to 5.

In particular, in the battery module according to the present disclosure, the bus bar 210 may be placed on the first electrode lead 111, above the recess region of the second electrode lead 112, and coupled thereto. In other words, referring to FIGS. 4 and 5, the first electrode lead 111 and the second electrode lead 112 made of different materials are stacked vertically and coupled to each other in contact, and the recess region where the second electrode lead 112 is partially absent is formed below the first electrode lead 111. Also, the bus bar 210 may be located horizontally on the first electrode lead 111 above the recess region.

Here, the bus bar 210 may come into contact with and be coupled to the first electrode lead 111 by means of welding. In particular, the bus bar 210 and the first electrode lead 111 may be welded by means of ultrasonic welding.

In the present disclosure, when the bus bar 210 is ultrasonic-welded to a coupled structure of the first electrode lead 111 and the second electrode lead 112, the bus bar 210 may not be coupled to both of the first electrode lead 111 and the second electrode lead 112 made of different materials but may be coupled just to the first electrode lead 111. Therefore, in this embodiment of the present disclosure, it is not needed to set complicated ultrasonic welding conditions or perform ultrasonic welding several times in order to couple the bus bar to two electrode leads made of different materials. Therefore, in the present disclosure, the electrode lead and the bus bar 210 may be coupled more easily, and the coupling and fixation between the electrode lead and the bus bar 210 may be stably secured. Therefore, in this embodiment of the present disclosure, the coupling process of the bus bar 210 and the electrode lead is improved, and it is possible to lower inferiority or failure probability caused by separation of the bus bar 210 and the electrode lead.

Preferably, the bus bar 210 may be made of the same metal material as the first electrode lead 111. In the present disclosure, the bus bar 210 is placed on the first electrode lead 111 and welded to the first electrode lead 111. In this case, if the bus bar 210 and the first electrode lead 111 are made of the same metal material as in this embodiment, the bus bar 210 and the first electrode lead 111 may be welded more efficiently, and their coupling may be stably secured after welding.

In particular, the bus bar 210 and first electrode lead 111 may be made of copper. Generally, copper is frequently used as a material of a negative electrode lead, and thus if the first electrode lead 111 is used as a negative electrode lead, the bus bar 210 may also be made of copper, identical to the first electrode lead 111.

Meanwhile, in this case, the second electrode lead 112 may be made of aluminum. Generally, aluminum is frequently used as a material of a positive electrode lead, and thus if the second electrode lead 112 is used as a positive electrode lead, the second electrode lead 112 may be made of aluminum, and the first electrode lead 111 and the bus bar 210 may be made of copper.

In this configuration, in the present disclosure, since the bus bar 210 is located above the recess region where the second electrode lead 112 is absent below the first electrode lead 111, the bus bar 210 made of copper may be welded to the first electrode lead 111 made of copper and may not be welded to the second electrode lead 112 made of aluminum.

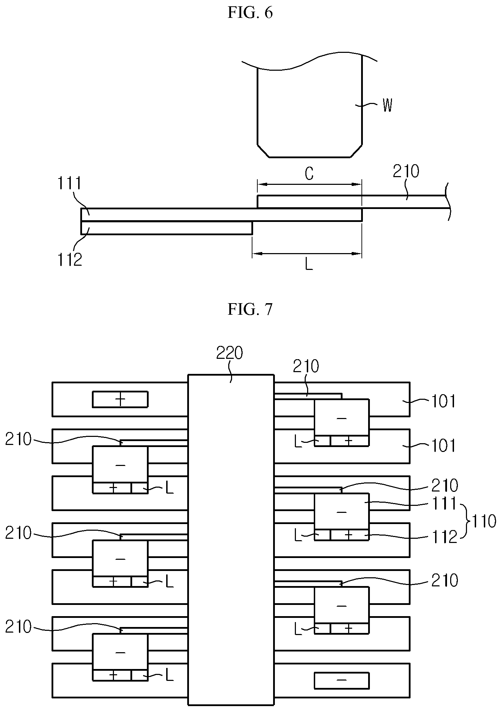

Preferably, the first electrode lead 111 may be configured so that the recess region of the second electrode lead 112 located below the first electrode lead 111 encompasses an entire area where the bus bar 210 is in contact with the upper surface of the first electrode lead 111. This will be described in more detail with reference to FIG. 6.

FIG. 6 is a front view schematically showing that a single bus bar 210 and two electrode leads are coupled according to an embodiment of the present disclosure. However, for convenience, a main body of the secondary battery or other components of the battery module are nit depicted in Fig. 6.

Referring to FIG. 6, the first electrode lead 111 and the second electrode lead 112 are stacked vertically and make surface contact with each other, and the second electrode lead 112 has a recess region at which the second electrode lead 112 is partially absent. In addition, the bus bar 210 is in contact with the upper surface of the first electrode lead 111. At this time, assuming that a contact portion between the bus bar 210 and the first electrode lead 111 is expressed as C and a contact portion between the second electrode lead 112 and the recess region is expressed as L, if C and L are provided to vertically overlap with each other, the region marked by C may be included in the region marked by L. In other words, when being observed from the above, the contact portion of the bus bar 210 and the first electrode lead 111 may be included in the recess region of the second electrode lead 112. If this is explained based on the first electrode lead 111, the first electrode lead 111 may be configured so that the second electrode lead 112 is not present below an area where the bus bar 210 is in contact with the upper surface of the first electrode lead 111.

For example, if the recess region is located at a right end of the second electrode lead 112 as shown in FIG. 6, a left end of the contact portion C of the bus bar 210 and the first electrode lead 111 may be located on the same line as a left end of the contact portion L, which is the recess region of the second electrode lead 112, or at a right side thereof.

In this embodiment of the present disclosure, when the bus bar 210 and the first electrode lead 111 are coupled to each other by means of ultrasonic welding or the like, since the second electrode lead 112 is not present below the contact portion of the first electrode lead 111 and the bus bar 210, the bus bar 210 may be welded just to the first electrode lead 111. In other words, as shown in the figure, when a welding unit W is located above the bus bar 210 and performs welding by applying ultrasonic waves in a lower direction, the bus bar 210 may be welded only to the first electrode lead 111, except for the second electrode lead 112. In particular, if the bus bar 210 is made of the same material as the first electrode lead 111 and made of a different material from the second electrode lead 112, the bus bar 210 may not be ultrasonic-welded to the second electrode lead 112 made of a different material, which may effectively improve the welding.

Also preferably, the recess region formed by allowing the second electrode lead 112 to be absent may be formed below one side end of the first electrode lead 111. For example, as shown in FIG. 6, the recess region of the second electrode lead 112 may be formed at a right end of the first electrode lead 111.

In this configuration of the present disclosure, the bus bar 210 may be easily located above the recess region and easily coupled to the first electrode lead 111. In particular, since the bus bar 210 generally extends from one side end of the first electrode lead 111 toward a center thereof and is placed on the first electrode lead 111, in this configuration, may be more easily located below the entire contact portion of the bus bar 210 and the first electrode lead 111, the recess region.

Meanwhile, the bus bar 210 may be connected to the electrode lead of the secondary battery in order to figure out an electric state or characteristic of the secondary battery. For example, the bus bar 210 may be attached to the electrode lead of the secondary battery and used for sensing a voltage of the secondary battery. Preferably, the bus bar 210 may be attached to a connection point of the first electrode lead 111 and the second electrode lead 112 to sense a voltage at the connection point.

In particular, the battery module according to the present disclosure may include a sensing assembly 200 for sensing voltages at both ends of each secondary battery, as a component distinguished from the cell assembly 100 including a plurality of secondary batteries, and the sensing assembly 200 may include the bus bar 210.

Preferably, two or more bus bars 210 may be included. At this time, the bus bars 210 may be coupled to different lead coupling structures 110. In particular, the bus bars 210 may be attached to all coupled structures of the first electrode lead 111 and the second electrode lead 112 so as to be used for sensing voltages of all secondary batteries.

The sensing assembly 200 may include a connector D for transmitting the voltage sensed from the bus bar 210 to another device, in addition to the bus bar 210. In other words, the battery module may further include the connector D as a component included in the sensing assembly 200, in addition to the bus bar 210. In addition, the connector may be connected to a device such as a BMS to transmit a sensed voltage of the secondary battery to the BMS. At this time, the bus bar 210 and the connector may be connected to each other by means of a connection member 220 such as a wire, and when a plurality of bus bars 210 is provided, a plurality of wires may also be provided. In this case, as indicated by I in FIGS. 2 and 3, the plurality of wires may be configured as a single bundle.

Also preferably, the sensing assembly 200 may further include the connection member 220.

Here, the connection member 220 may connected to one end of the wire and the other end of the bus bar 210 to mediate an electric connection between the bus bar 210 and the wire. In particular, the connection member 220 may fix the other end of the bus bar 210 to support the bus bar 210. Further, if the battery module includes a plurality of bus bar 210, the plurality of bus bars 210 may be coupled to the connection member 220, and at this time, the plurality of bus bars 210 may be arranged at the connection member 220 to be vertically spaced apart from each other.

Meanwhile, in the battery module according to the present disclosure, the secondary battery included in the cell assembly 100 may be a one-directional secondary battery. Here, the one-directional secondary battery may be a secondary battery at which the positive electrode lead and the negative electrode lead protrude on the same side, as shown in FIGS. 2 and 3. In other words, the pouch-type secondary battery may be configured to have a rectangular shape with four sides, when being observed from the above, and the one-directional secondary battery includes the positive electrode lead and the negative electrode lead at one side, among four sides.

If the battery module includes a plurality of one-directional secondary batteries as described above, the bus bars 210 may be provided to alternately protrude at right and left directions from the center of the secondary batteries. This will be described in more detail with reference to FIG. 7.

FIG. 7 is a front view schematically showing a partial configuration of the battery module according to an embodiment of the present disclosure, in which the bus bar 210 and the electrode leads are connected.

Referring to FIG. 7, seven secondary batteries are stacked vertically, and for connecting adjacent secondary batteries in series, electrode leads of opposite polarities are connected to each other. At this time, the negative electrode lead may be regarded as the first electrode lead 111, and the positive electrode lead may be regarded as the second electrode lead 112. In addition, the bus bar 210 may be placed on the negative electrode lead, namely the first electrode lead 111, of each secondary battery and ultrasonic-welded to the first electrode lead 111.

In particular, the connection member 220 may be located between a positive electrode lead and a negative electrode lead of a one-directional secondary battery, and a plurality of bus bars 210 may be provided to alternately protrude in right and left directions in a state where the other ends of the bus bars 210 are connected to the connection member. In FIG. 7, three bus bars 210 are provided to protrude in a left direction of the connection member 220, and other three bus bars 210 are provided to protrude in a right direction of the connection member 220, so as to be connected to connection portions of the electrode leads 110. Therefore, in this configuration of the present disclosure, voltages of all secondary batteries included in the battery module may be easily detected by using just a single sensing assembly 200, with a simple structure.

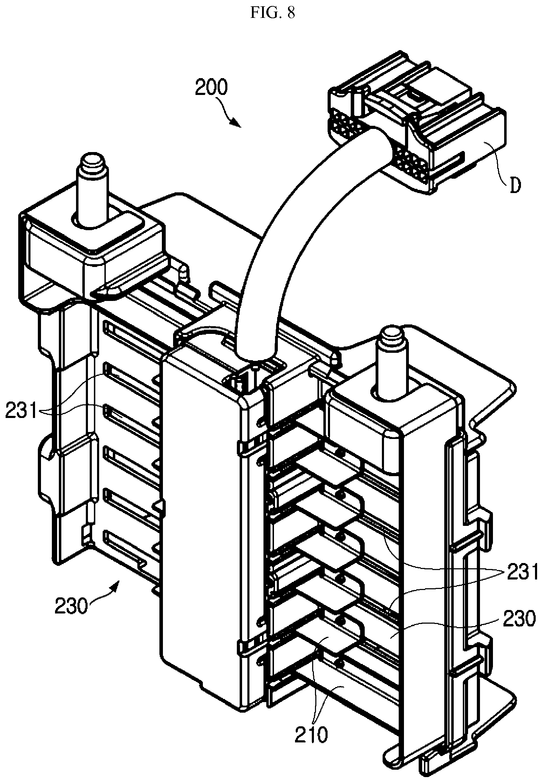

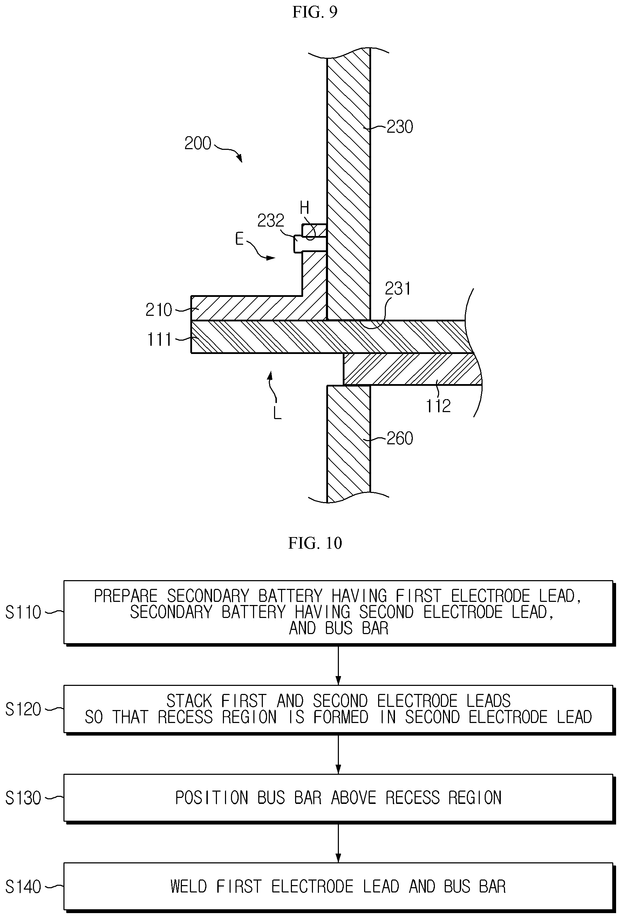

Also preferably, the battery module may further include a support member as a component included in the sensing assembly 200. This will be described in more detail with reference to FIGS. 8 and 9.

FIG. 8 is a schematic view showing a sensing assembly 200 including the bus bar 210 according to an embodiment of the present disclosure. In addition, FIG. 9 is an enlarged cross-sectional view schematically showing a partial configuration of FIG. 8.

Referring to FIGS. 8 and 9, the support member 230 is formed with a plate shape standing vertically and may be provided between the bus bar 210 and the secondary battery. In particular, a through hole 231 may be formed in the support member 230, and the electrode lead may pass through the through hole 231 be supported therein. In other words, the electrode lead of the secondary battery may pass through the through hole 231 of the support member and be fixed to the bus bar 210 of the sensing assembly 200 in contact. Due to the through hole 231, the electrode lead may be supported particularly in a vertically direction so that its vertical movement is restricted. Therefore, the electrode lead and the bus bar 210 fixed to each other by welding may be not separated but maintained in a fixed state more stably. In particular, when the battery module is used for a vehicle or the like, the battery module may be exposed to a strong vibration or impact. In this case, if the electrode lead is supported through the through hole 231 of the support member as described above, it is possible to prevent the electrode lead from being easily separated from the bus bar 210 due to such a vibration or impact. Moreover, since the electrode leads are supported by the through holes 231 in a vertical direction, a gap between the electrode leads is not narrowed, thereby preventing any problem such as an internal short circuit from being caused due to a contact of the electrode leads.

Also preferably, the bus bar 210 has a bent portion formed by bending a part thereof in a vertical direction, and the bent portion may be coupled and fixed to the support member. For example, as shown in various figures, the bus bar 210 may have a horizontally flat configuration to make surface contact with the electrode lead and also include a bent portion vertically bent as indicated by E so that the bent portion is coupled and fixed to the support member.

In this configuration of the present disclosure, since the bus bar 210 is coupled and fixed to the support member by means of the bent portion E, the bus bar 210 and the electrode lead may be welded more easily. Moreover, in this configuration of the present disclosure, it is possible to prevent the bus bar 210 and the electrode lead from shaking, and thus the bus bar 210 and the electrode lead coupled to each other may not be easily separated due to a vibration or impact.

Here, a coupling hole may be formed in the bent portion E of the bus bar 210, as indicated by H. In addition, the coupling member 232 may be inserted into and coupled to the coupling hole H of the bus bar 210 to couple and fix the bus bar 210 and the support member. At this time, the coupling member 232 may be a protrusion formed on the support member or another part such as bolt, separated from the support member. In this configuration of the present disclosure, the support member and the bus bar 210 are coupled and fixed by means of the coupling member 232, and thus this coupling may be stably maintained.

Further, in this configuration, the bus bar 210, the first electrode lead 111 and the second electrode lead 112 may be stacked in order in a lower direction. In addition, the recess region L of the second electrode lead may be located below an area where the bus bar is not located on the first electrode lead 111. In this configuration, a process of welding the bus bar and the first electrode lead, a process of welding the first electrode lead and the second electrode lead and a process of welding the bus bar and the support member may be performed easily.

The battery pack according to the present disclosure includes at least one battery module described above. At this time, the battery pack may further include a case for accommodating the battery module and various devices for controlling the battery module, for example a battery management system (BMS), a current sensor, a fuse and so on, in addition to the pack module. In particular, the battery pack according to an embodiment of the present disclosure may be configured so that the connector D provided at the sensing assembly 200 of the battery module is connected to the BMS.

The battery module according to the present disclosure may be applied to a vehicle such as an electric vehicle and a hybrid vehicle. In other words, the vehicle according to the present disclosure may include the battery module according to the present disclosure. The battery module used for a vehicle or the like may be exposed to a strong vibration or impact. However, in case of the battery module according to the present disclosure, the electrode lead and the bus bar 210 are welded excellently, and thus it is possible to prevent the electrode lead and the bus bar 210 from being easily separated due to such a vibration or impact.

Hereinafter, a method for manufacturing a battery module will be described in brief.

FIG. 10 is a schematic flowchart for illustrating a manufacturing method of the battery module.

Referring to FIG. 10, a method for manufacturing a battery module includes: preparing two or more secondary batteries and a bus bar 210 (S110), stacking a first electrode lead 111 and a second electrode lead 112 (S120), positioning the bus bar 210 (S130), and welding the first electrode lead 111 and the bus bar 210 (S140).

In Step S110, a secondary battery having a first electrode lead 111 made of a metal material with a plate shape, another secondary battery having a plate shape made of another metal material different from the first electrode lead 111 and having a second electrode lead 112 for the connection to the first electrode lead 111, and a bus bar 210 made of a metal material with a plate shape are prepared.

In Step S120, the second electrode lead 112 is positioned below the first electrode lead 111 to make surface contact with the first electrode lead 111 so that the first electrode lead 111 and the second electrode lead 112 are stacked. In particular, in Step S120, a recess region where the second electrode lead 112 is partially absent is formed below the first electrode lead 111.

In Step S130, a bus bar 210 is positioned on the first electrode lead 111, so that the recess region of the second electrode lead 112 is formed below an area where the bus bar 210 is positioned. In other words, in Step S130, the bus bar 210 is positioned on the first electrode lead 111 in an area where the recess region is formed below the first electrode lead 111.

In Step S140, the first electrode lead 111 and the bus bar 210 are welded. Preferably, Step S140 may be performed by means of ultrasonic welding. Also preferably, in Step S140, the bus bar 210 may be welded only in an area where the recess region of the second electrode lead 112 is positioned therebelow.

Meanwhile, before Step S130, a step of welding the second electrode lead 112 and the first electrode lead 111 may be further included.

Also preferably, before Step S120, a step of cutting and removing a part of the second electrode lead 112 to form the recess region of the second electrode lead 112 may be further included.

## Claims

1. A battery module, comprising:
a first electrode lead (111) provided at one secondary battery among a plurality of vertically stacked secondary batteries (101), the first electrode lead being made of a metal material with a plate shape;
a second electrode lead (112) provided at a secondary battery other than the secondary battery having the first electrode lead, the second electrode lead having a plate shape and being made of a metal material different from the first electrode lead
wherein the electrode leads provided at different secondary batteries are coupled in contact vertically, the first electrode lead being located at an upper portion and the second electrode lead being located at a lower portion, the first electrode lead being provided at a secondary battery stacked at an upper portion and the second electrode lead being provided at a secondary battery stacked at a lower portion in addition to an upper surface coming into contact with a lower surface of the first electrode lead being welded to the first electrode lead, the second electrode lead having a recess region (L) where the second electrode lead is partially absent below the first electrode lead; and
a bus bar (210) made of a metal material with a plate shape, the bus bar coming into contact with the first electrode lead in an area above the recess region of the second electrode lead wherein the bus bar contacts the upper surface of the first electrode lead above the recess region,
wherein the bus bar is made of the same metal material as the first electrode lead,
wherein the bus bar and the first electrode lead are welded by means of ultrasonic weldingand
wherein the recess region of the second electrode lead encompasses an entire area in which the bus bar is in contact with an upper portion of the first electrode lead.

2. The battery module according to claim 1,
wherein the recess region is formed below the first electrode lead at one end portion of the first electrode lead.

3. The battery module according to claim 1,
wherein the bus bar and the first electrode lead are made of copper, and the second electrode lead is made of aluminum.

4. The battery module according to claim 1,
wherein the bus bar is configured to sense a voltage at a connection point of the first electrode lead and the second electrode lead.

5. The battery module according to claim 1,
wherein the battery module includes two or more bus bars.

6. The battery module according to claim 1, further comprising:
a support member having a plate shape standing vertically, the support member having a through hole (231) through which the first and second electrode leads are provided and supported.

7. The battery module according to claim 6,
wherein the bus bar has a bent portion formed by vertically bending a part thereof, the bent portion (E) being coupled and fixed to the support member (230).

8. A battery pack, comprising the battery module defined in any one of claims 1 to 7.

9. A vehicle, comprising the battery module defined in any one of claims 1 to 7.

## Patentansprüche

1. Batteriemodul, umfassend:
eine erste Elektrodenleitung (111), welche an einer Sekundärbatterie unter einer Mehrzahl von vertikal gestapelten Sekundärbatterien (101) bereitgestellt ist, wobei die erste Elektrodenleitung aus einem Metallmaterial mit einer Plattenform hergestellt ist;
eine zweite Elektrodenleitung (112), welche an einer Sekundärbatterie bereitgestellt ist, welche von der Sekundärbatterie mit der ersten Elektrodenleitung verschieden ist, wobei die zweite Elektrodenleitung eine Plattenform aufweist und aus einem Metallmaterial hergestellt ist, welches von der ersten Elektrodenleitung verschieden ist,
wobei die Elektrodenleitungen, welche an verschiedenen Sekundärbatterien bereitgestellt sind, vertikal in Kontakt gekoppelt sind, wobei die erste Elektrodenleitung an einem oberen Abschnitt angeordnet ist und die zweite Elektrodenleitung an einem unteren Abschnitt angeordnet ist, wobei die erste Elektrodenleitung an einer Sekundärbatterie bereitgestellt ist, welche an einem oberen Abschnitt gestapelt ist, und die zweite Elektrodenleitung an einer Sekundärbatterie bereitgestellt ist, welche an einem unteren Abschnitt zusätzlich zu einer oberen Fläche gestapelt ist, welche mit einer unteren Fläche der ersten Elektrodenleitung in Kontakt kommt, welche an die erste Elektrodenleitung geschweißt ist, wobei die zweite Elektrodenleitung einen Ausnehmungsbereich (L) aufweist, an welchem die zweite Elektrodenleitung unter der ersten Elektrodenleitung teilweise fehlend ist; und
eine Sammelschiene (210), welche mit einer Plattenform aus einem Metallmaterial hergestellt ist, wobei die Sammelschiene mit der ersten Elektrodenleitung in einem Bereich über dem Ausnehmungsbereich der zweiten Elektrodenleitung in Kontakt kommt, wobei die Sammelschiene die obere Fläche der ersten Elektrodenleitung über dem Ausnehmungsbereich kontaktiert,
wobei die Sammelschiene aus dem gleichen Metallmaterial hergestellt ist wie die erste Elektrodenleitung,
wobei die Sammelschiene und die erste Elektrodenleitung mittels Ultraschallschweißen geschweißt sind, und
wobei der Ausnehmungsbereich der zweiten Elektrodenleitung einen gesamten Bereich umgibt, in welchem die Sammelschiene mit einem oberen Abschnitt der ersten Elektrodenleitung in Kontakt ist.

2. Batteriemodul nach Anspruch 1,
wobei der Ausnehmungsbereich unter der ersten Elektrodenleitung an einem Endabschnitt der ersten Elektrodenleitung gebildet ist.

3. Batteriemodul nach Anspruch 1,
wobei die Sammelschiene und die erste Elektrodenleitung aus Kupfer hergestellt sind und die zweite Elektrodenleitung aus Aluminium hergestellt ist.

4. Batteriemodul nach Anspruch 1,
wobei Sammelschiene dazu eingerichtet ist, eine Spannung an einem Verbindungspunkt der ersten Elektrodenleitung und der zweiten Elektrodenleitung zu erfassen.

5. Batteriemodul nach Anspruch 1,
wobei das Batteriemodul zwei oder mehr Sammelschienen umfasst.

6. Batteriemodul nach Anspruch 1, ferner umfassend:
ein Halterungselement, welches eine Plattenform aufweist, welches vertikal steht, wobei das Halterungselement ein Durchgangsloch (231) aufweist, durch welches die ersten und zweiten Elektrodenleitungen bereitgestellt und gehaltert sind.

7. Batteriemodul nach Anspruch 6,
wobei die Sammelschiene einen gebogenen Abschnitt aufweist, welcher durch vertikales Biegen eines Teils davon gebildet ist, wobei der gebogene Abschnitt (E) mit dem Halterungselement (230) gekoppelt und daran befestigt ist.

8. Batteriepack, umfassend das Batteriemodul, welches in einem der Ansprüche 1 bis 7 definiert ist.

9. Fahrzeug, umfassend das Batteriemodul, welches in einem der Ansprüche 1 bis 7 definiert ist.

## Revendications

1. Module de batterie, comprenant :
un premier fil d'électrode (111) prévu au niveau d'une batterie secondaire parmi une pluralité de batteries secondaires (101) empilées verticalement, le premier fil d'électrode étant réalisé en un matériau métallique ayant une forme de plaque ;
un deuxième fil d'électrode (112) prévu au niveau d'une batterie secondaire autre que la batterie secondaire ayant le premier fil d'électrode, le deuxième fil d'électrode ayant une forme de plaque et étant réalisé en un matériau métallique différent de celui du premier fil d'électrode,
dans lequel les fils d'électrode prévus au niveau de différentes batteries secondaires sont couplés en contact verticalement, le premier fil d'électrode étant situé au niveau d'une portion supérieure et le deuxième fil d'électrode étant situé au niveau d'une portion inférieure, le premier fil d'électrode étant prévu au niveau d'une batterie secondaire empilée au niveau d'une portion supérieure et le deuxième fil d'électrode étant prévu au niveau d'une batterie secondaire empilée au niveau d'une portion inférieure en plus d'une surface supérieure venant en contact avec une surface inférieure du premier fil d'électrode étant soudée au premier fil d'électrode, le deuxième fil d'électrode ayant une région d'évidement (L) où le deuxième fil d'électrode est partiellement absent en dessous du premier fil d'électrode ; et
une barre omnibus (210) réalisée en un matériau métallique ayant une forme de plaque, la barre omnibus venant en contact avec le premier fil d'électrode dans une zone au-dessus de la région d'évidement du deuxième fil d'électrode, dans lequel la barre omnibus entre en contact avec la surface supérieure du premier fil d'électrode au-dessus de la région d'évidement,
dans lequel la barre omnibus est réalisée en le même matériau métallique que celui du premier fil d'électrode,
dans lequel la barre omnibus et le premier fil d'électrode sont soudés par soudage par ultrasons, et
dans lequel la région d'évidement du deuxième fil d'électrode englobe toute une zone dans laquelle la barre omnibus est en contact avec une portion supérieure du premier fil d'électrode.

2. Module de batterie selon la revendication 1,
dans lequel la région d'évidement est formée en dessous du premier fil d'électrode au niveau d'une portion d'extrémité du premier fil d'électrode.

3. Module de batterie selon la revendication 1,
dans lequel la barre omnibus et le premier fil d'électrode sont réalisés en cuivre, et le deuxième fil d'électrode est réalisé en aluminium.

4. Module de batterie selon la revendication 1,
dans lequel la barre omnibus est configurée pour détecter une tension à un point de raccordement du premier fil d'électrode et du deuxième fil d'électrode.

5. Module de batterie selon la revendication 1,
dans lequel le module de batterie comporte deux barres omnibus ou plus.

6. Module de batterie selon la revendication 1, comprenant en outre :
un élément de support ayant une forme de plaque placé verticalement, l'élément de support ayant un trou traversant (231) à travers lequel les premier et deuxième fils d'électrode sont prévus et supportés.

7. Module de batterie selon la revendication 6,
dans lequel la barre omnibus a une portion pliée formée en pliant verticalement une partie de celle-ci, la portion pliée (E) étant couplée et fixée à l'élément de support (230).

8. Bloc-batterie comprenant le module de batterie défini dans l'une quelconque des revendications 1 à 7.

9. Véhicule, comprenant le module de batterie défini dans l'une quelconque des revendications 1 à 7.
